# EUROPEAN PATENT APPLICATION

(11) **EP 1 475 617 A1**
(43) Date of publication of application: **10.11.2004**
(21) Application number: 03388030.3
(22) Date of filing: 06.05.2003
(51) Int. Cl.: G01G 19/393, G01G 19/32

(54) **A weighing and classifying system**

(71) Applicant: CABINPLANT INTERNATIONAL A/S, DK-5683 Haarby (DK)
(72) Inventor: Hansen, Henning Ingemann, 5220 Odense SO (DK)
(74) Representative: Nielsen, Henrik Sten

(57) **Abstract**

A weighing and classifying system comprises a first plurality of receptacles mounted in a frame defining a first semicircle around a shaft. The system further comprises a first plurality of weighing pans mounted in the frame below said first receptacles for receiving in a single article discharge from a respective receptacle. The first plurality of weighing pans defines a second semicircle around the shaft. The system still further comprises a transfer carrousel mounted rotatably on the shaft having a second plurality of transfer containers defining a first circle around the shaft. The system includes a number of grade positions for receiving a specific grade of articles, which grade positions define a third semicircle arranged opposite the first and the second semicircles. Each grade corresponds to a specific weight or specific weight interval, and a computer for recording the first, second and third signals from the respective transducers.

## Description

The present invention relates to weighing machines and grading/classifying machine of the rotary type in which a grading or classification is determined by a computer, based on the weight of the articles being graded.

In many industries a need for grading, classifying or sorting articles by weight exists, such as the foodstuff industry. The determination of the weight may be performed by a human estimating the weight by picking up the article, another alternative is by attaching a computer to an optical inspection system or the like, and attempting to determine the weight of the article based on knowledge of the density of the articles being classified. It is contemplated, however, that a method of obtaining a uniform determination of the weight, and consequently a more precise grading or classifying of the article, is by utilising a weight.

Within the foodstuff industry, said graders have been used in e.g. for sorting fish or seafood products such as fillets of fish, e.g. codfish, salmon, etc. and shellfish such as lobsters, shrimps and in this context particularly so-called giant shrimps. In a conventional rotary grader, a carrousel is provided having a plurality of compartments into which the individual article such as a shrimp is introduced, and in the compartment, a weighing sensor is provided for determining the weight of the article. After the determination of the weight of the article, the carrousel moves to a position along the periphery of the carrousel and delivers the article to a specific position corresponding to a specific weight.

The above-described general type rotary grader suffers, however, from certain limitations due to the structure of the machine. Basically, the weighing operation is performed simultaneously with the rotation of the carrousel, and therefore the weighing operation is subject to influence from the rotational motion, which may give origin to a certain inaccuracy of the determination of the weight of the article in question.

Rotary graders are described in numerous patent applications among which reference is made to EP 0 592 349, US 4,832,092, US 6,521,854, US 6,536,599, US 3,557,951, WO 99/37977, US 6,408,223, EP 0 764 113, WO 95/35238, US 3,638,911, and which patents are hereby incorporated in the present specification by reference.

Due to the recognition of certain drawbacks in the conventional rotary grader technique, it has been realised that there is a need for an improved high-precision grader in which the rotational sorting may be performed at an extremely high speed without influencing the grading or weighing operation.

Furthermore, it is an object of the present invention to provide a high-precision, high-speed and mechanically simple weighing and classification system in which the drawbacks of the conventional rotary grader are eliminated.

A particular feature of the present invention relates to the fact that the weighing and classifying system according to the present invention is of a fairly simple mechanical structure and further allows the weighing and classification to be performed while the article in question is kept stationary rather than while rotating the article as in a conventional rotary grader.

It is a particular advantage of the present invention that the weighing and classifying system may be implemented as an automated, semi-automated or manually operated system in which the feeding of the articles may be performed manually or automated and in which the sorting of the articles may be carried out automated or semi-automated as the weighing and classifying system may be refined into a system allowing the articles to be sorted into a high number of grades.

The above need, the above object, the above feature and the above advantage together with numerous other objects, advantages and features which will be evident from the below detailed description of the presently and preferred embodiment of the weighing and classifying system according to the present invention are obtained according to the teachings of the present invention by a weighing and classifying system for weighing, classifying and distributing articles comprising:
a frame,
a shaft mounted in the frame,
a motor for driving the shaft,
a first plurality of receptacles mounted in the frame, the first plurality of receptacles defining a first semicircle around the shaft, each of the receptacles defining a first open end orientated upwardly, the receptacle being operable between a receiving state and a discharge state, the receptacle including a first actuator having an electric input for receiving a first control signal, the first actuator operating the receptacle from the receiving state to the discharge state when receiving the first control signal, the receptacle receiving one of the articles through the first end of the receptacle when in the receiving state, and the receptacle discharging the one article when in the discharge state,
a first plurality of weighing pans mounted in the frame below the first plurality of the receptacles for receiving in each of the weighing pans a single article discharge from a respective receptacle, the first plurality of weighing pans defining a second semicircle around the shaft, each of the weighing pans defining a second open end orientated upwardly, the weighing pan being operable between a weighing state and a transfer state, the weighing pan including a second actuator having a second electric input for receiving a second control signal, the second actuator operating the weighing pan from the weighing state to the transfer state when receiving the second control signal, the weighing pan receiving one of the articles through the second end of the weighing pan from a respective receptacle when in the weighing state, and the weighing pan transferring the one article when in the transfer state, each of the weighing pans including a weighing transducer for generating a signal representing the weight of the one article received within the weighing pan,
a transfer carrousel mounted rotatably on the shaft having a second plurality of transfer containers, the second plurality of transfer containers defining a first circle around the shaft, the second plurality being at least twice the number of the first plurality,
the second plurality of transfer containers mounted on the transfer carrousel below the first plurality of the weighing pans for receiving from each of the weighing pans a single article transferred therefrom in a respective transfer container, each of the transfer containers defining a third open end orientated upwardly, the transfer container being operable between a containment state and an ejection state, the transfer container including a third actuator having a third electric input for receiving a third control signal, the third actuator operating the transfer container from the containment state to the ejection state when receiving the third control signal, the transfer container receiving one of the articles through the third end of the transfer container when in the containment state, and the transfer container ejecting the one article when in the ejection state,
a number of grade positions for receiving a specific grade of articles, the grade positions defining a third semicircle, the third semicircle arranged opposite the first and the second semicircles, each grade corresponding to a specific weight or specific weight interval,
a computer for recording the first, second and third signals from the respective transducers, the computer including a list defining the grades, the computer being connected to the transducers, the actuators and the motor for the controlling thereof.

It is a basic principle of the weighing and classifying system according to the present invention that the weighing be performed by weighing pans positioned along a semicircle allowing the articles to be transferred from the weighing pans into the containers of the carrousel in a simple operation is used for transferring the individual articles, the weight of which have been determined, from the weighing pans to the transfer containers of the transfer carrousel. The operation of the weighing and classifying system according to the present invention allows a simple, gentle and high-accuracy handling and weight determination of the individual articles at a high speed in a structure which includes only a single rotating part, namely the transfer carrousel having a minimum of components as compared to the conventional rotary grader as the weighing and classifying system includes a set of weighing pans different from the containers of the transfer carrousel.

The weighing and classifying system may, as mentioned above, be modified from a manually operated system into a semi-automated or fully automated system. Consequently, according to a first embodiment of the weighing and classifying system, a feeder system is provided for feeding the articles to the first plurality of receptacles and for feeding the individual articles into the individual receptacles of the first plurality of receptacles individually. The feeder system may be implemented in accordance with technical principles well known in the art per se such as by means of a feeder belt or a vibrating table.

The fully automated version of the weighing and classifying system also includes a collector carrousel for collecting a specific number of articles of a specific grade, said collector carrousel being positioned below said transfer carrousel and being mounted rotatably on said shaft having a third plurality of collector containers, said transfer carrousel rotating in a direction opposite to the direction of rotation of said transfer carrousel, said third plurality of collector containers being mounted on said collector carrousel, each of said collector containers defining a fourth open end orientated upwardly, said collector container being operable between a collector state and a ejection state, said collector container including a fourth actuator having a fourth electric input for the receiving of a fourth control signal, said fourth actuator operating said container from said collector state to said ejection state when receiving said fourth control signal, and said collector container ejecting said specific number of articles received therein when in said ejection state.

Preferably, the third plurality is identical to the second plurality, consequently, the transfer carrousel and the collector carrousel preferably have the same number of transfer containers and collector containers, respectively. The weighing and classifying system being a fully automated system functions as follows as the articles such as giant shrimps are fed to the first plurality of receptacles by means of the feeder system, and the feeder system feeds a single article into each of the receptacles individually.

As the computer detects the presence of an article in each of the receptacles, provided the weighing pans have been emptied, the receptacles are operated by means of the first actuators as the computer addresses the actuators by means of the first control signal causing the receptacles to discharge the articles received therein individually to the weighing pans.

After the discharging of the articles from the individual receptacles to the individual weighing pans, the weighing pans perform the weighing operation for determining the individual weight of each of the articles such as the giant shrimps received within the weighing pans.

Thereupon, after the completion of the weighing operation, the individual articles are to be transferred individually to the transfer carrousel and provided the transfer carrousel has rotated at least one semicircle for emptying previously transferred articles therefrom to the grade positions, the computer addresses the second actuators for transferring the articles, the weight of which have been determined individually, to the individual containers of the transfer carrousel.

At this time, the computer knows the exact weight of each of the articles received within the individual containers of the transfer carrousel and therefore addresses, as the transfer carrousel continues to rotate, the individual container at the time the container in question is positioned above a collector container of the transfer collector carrousel for ejecting the article from the transfer container of the transfer carrousel to the collector container of the collector carrousel of the specific grade. As distinct from the semi-automated or manually operated system, in which the ejection of the articles is performed into a collector positioned at the grade position in question, the automated system including the collector carrousel collects a specific number of articles of each grade before ejecting the number of articles of a specific grade when the collector container of the collector carrousel has received the number in question and is positioned above the relevant grade position for the ejection of the specific number of articles of the specific grade in question.

The structure of the individual components and elements of the weighing and classifying system according to the present invention may be implemented in accordance with numerous technical solutions. Consequently, according to a further embodiment of the weighing and classifying system according to the present invention, each of the receptacles define an end opposite the first end, the end opposite the first end having a first shutter, the first shutter shutting the end in a radial direction or in an axial direction alternatively the first shutter being a two-part shutter, the first shutter being operated by the first actuator.

According to an alternative embodiment, each of the receptacles define an end opposite the first end, the end being a closed end, the receptacle further comprising a first revolution axle connecting the first actuator and the receptacle.

The structure of the individual components and elements of the weighing and classifying system according to the present invention may be implemented in accordance with numerous technical solutions. Consequently, according to a further embodiment of the weighing and classifying system according to the present invention, each of the weighing pans defines an end opposite the second end, the end opposite the second end having a second shutter, the second shutter shutting the end opposite the second end in a radial direction or in an axial direction alternatively the second shutter being a two-part shutter, the shutter being operated by the second actuator.

According to an alternative embodiment of the weighing pans, each of the weighing pans of the transfer containers defines an end opposite the second end, the end opposite the second end being a closed end, the weighing pan further comprising a second revolution axle connecting the second actuator and the weighing pan.

The structure of the individual components and elements of the weighing and classifying system according to the present invention may be implemented in accordance with numerous technical solutions. Consequently, according to a further embodiment of the weighing and classifying system according to the present invention, each of the receptacles defines an end opposite the third end, the end opposite the third end having a third shutter, the third shutter shutting the end opposite the third end in a radial direction or in an axial direction alternatively the third shutter being a two-part shutter, the shutter being operated by the second actuator.

According to an alternative embodiment of the weghing pans, each of the weighing pans of the transfer containers define an end opposite the third end, the end opposite the third end being a closed end, the weighing pan further comprising a third revolution axle connecting the third actuator and the transfer container.

The first and second actuators may according to alternative embodiments be operated individually or collectively as the first actuators may be addressed individually or alternatively simultaneously for transferring a single article from a specific receptacle to a specific weighing pan or alternatively all receptacles are caused to discharge the articles received therein to the respective weighing pans. Similarly, the second actuators of the weighing pans may be operated individually or collectively.

The system according to the present invention is preferably mechanically supported on a platform attached to the frame and the motor powering the transfer carrousel and optionally also the collector carrousel may mounted on the shaft by means of a gear assembly or a gear means.

According to a particular of the system according to the present invention, a specific grade position is provided for emptying the transfer containers one at a time when the transfer carrousel passes each of the containers over the specific emptying position, thereby ensuring that the transfer carrousel is empty when positioned below the weighing pans.

It is to be understood that the discharging of the articles from the receptacles to the weighing pans and similarly the transferring of the article from the weighing pans to the transfer containers of the transfer carrousel may be performed by means of mechanical moving elements such as ejectors, rotating arms, pivoting assemblies, etc. However, according to the presently preferred implementation of the weighing and classifying system according to the present invention, the shifting of the articles from the receptacles to the weighing pans and further from the weighing pans to the transfer containers of the transfer carrousel and still further if provided from the transfer carrousel to the collector containers of the collector carrousel by the impact of the gravitational force by simply opening the receptacles, the weighing pans, the transfer containers and optionally the collector containers.

The present invention is now to be further described with reference to the drawings in which
Fig. 1 is a schematically top view of a machine for weighing and grading.
Fig. 2 is a schematically cross-sectional side view of a machine for weighing and grading.
Fig 3 A is a schematically side view of a receptacle.
Fig 3 B is a schematically side view of a weighing pan.
Fig 3 C is a schematically cross-sectional view of a weighing pan with open shutter.
Fig 3 D is a schematically cross-sectional view of a weighing pan with closed shutter.
Fig 3 E is a schematically side view of a transport container.
Fig 3 F is a schematically cross-sectional view of a container with closed shutter.
Fig. 4 is a schematically top view of a machine for weighing and grading.
Fig. 5 is a schematically cross-sectional side view of a machine for weighing and grading.
Fig. 6 is a schematically side view of a second container for batching.

A system for grading or classifying articles wherein the articles are conveyed on a conveyor belt, or another linear conveyor method, may take up a lot of factory floor space, which in many countries, or parts of countries, is expensive. One solution of making a compact system is to design a rotational system having a number of levels for collecting and weighing the articles.

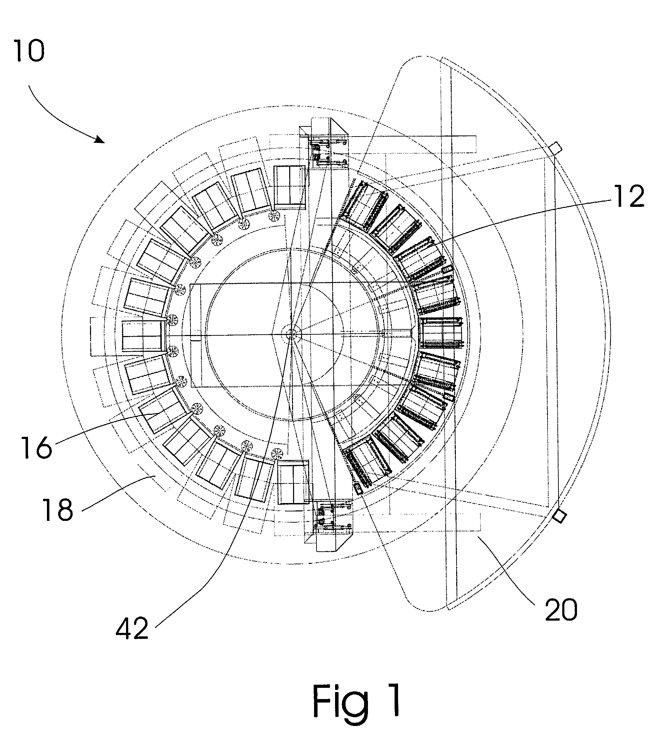

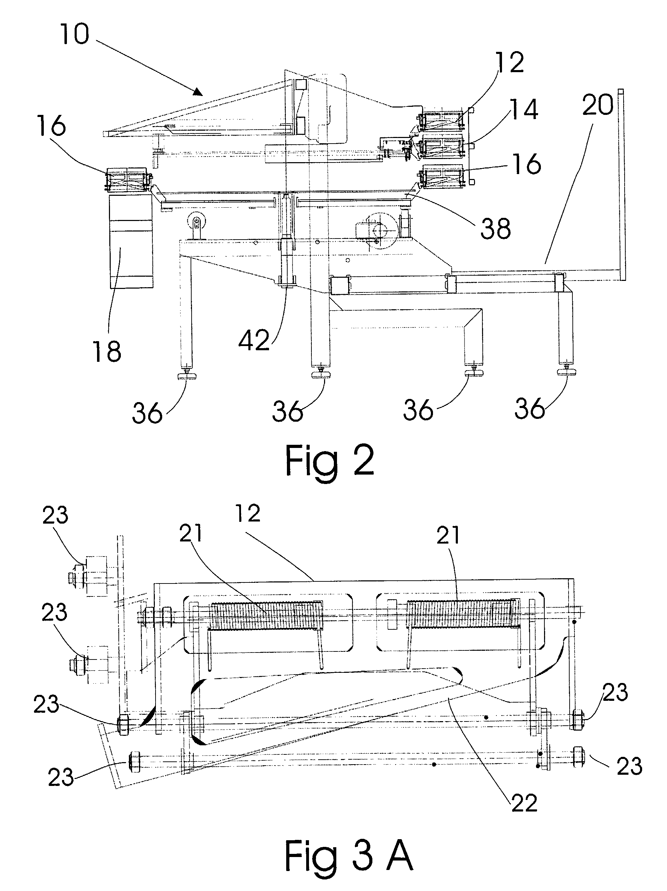

Fig. 1 is a schematic top view of a machine for weighing and grading articles according to the present invention and Fig. 2 is a schematic, partly-cross-sectional side view of the machine of Fig. 1, the machine being designated the reference numeral 10.

The articles to be weighed and graded are fed from above to the machine 10 in order for one or more operators to distribute the articles into a number of receptacles 12 adapted for receiving one article each, alternatively the distribution into the receptacles 12 may be performed by means of a feeder, such as a conveyor belt, a vibrational table or similar mechanical system, not illustrated.

Directly below the receptacles 12 a number of weighing pans 14, preferably corresponding to the number of receptacles 12, are arranged. The receptacles 12 periodically empty the contents into the weighing pans 14. The possibility of filling additional articles into the receptacle 12 during the emptying of the receptacle 12 may be eliminated by adding a shutter at the top of the receptacle 12.

The weighing pans 14 are connected to a computer that registers the weight of the contents of each weighing pan 14.

In a level below the weighing pans 14 a carrousel 38 having a number of containers 16 is rotating continuously for transporting the articles to a predetermined collection point 18, such as a box, bucket or the like. The computer compares the weight registered from the weighing pan 14 to a predetermined scale or grading system/list or database and thereby determines which collection point 18 the container 16 should drop the article into.

The carrousel 38 is mounted on a shaft 42. A motor, preferably an electromotor, drives the shaft via a gear connection, not shown.

In a prototype version of the machine 10 the diameter of the weighing machine is 2500 mm. The machine has 5 to 500 g weighing ranges, a working height of 1200 mm and a discharge height of 900 mm. The cross-sectional dimensions of the weighing pans 14 correspond to the cross-sectional dimensions of the receptacles 12, alternatively the cross-sectional dimensions of the weighing pans 14 are smaller or larger than the cross-sectional dimensions of the receptacles 12.

The prototype version of the machine 10 has been designed having nine receptacles 12 for receiving the articles and nine weighing pans 14 and twenty-four containers 16. In the prototype design one collection point 18 is used as a fixed reject station, ensuring that no container 16 will contain an article prior to the reception of an article from the weighing pan 14. The prototype version is able to handle twelve grades and one reject station. The prototype version is able to process 300 articles pr minute with an accuracy of +/- 0.1 g.

An alternative to having the weighing pans 14 mounted in the frame is to mount them on a carrousel, this, however, is disadvantageous because unintended vibrations will deteriorate the precision of the weighing, these vibrations will increase with increasing speed.

The size of the receptacles 12 may be determined or otherwise limited by the shape, or any other, characteristics of the articles to be weighed and graded, e.g. in a system for weighing and grading tiger prawns the openings in all receptacles 12, weighing pans 14 and containers 16 are required to be of a size such that the antennas of the tiger prawns are not broken. Such limitations may not exist for systems weighing and grading apples, in which case issues such as bruising, are to be considered.

Fig. 2 further illustrates the three levels of respectively the receptacle 12, the weighing pan 14 and the transfer unit level 16.

The machine 10 may further be fitted with a plateau or platform 20 for the operators to stand, alternatively sit, whilst performing the distribution of the articles into the receptacles 12. Also the machine 10 may be fitted with a number of height adjustable supporting legs 36 for stability and levelling.

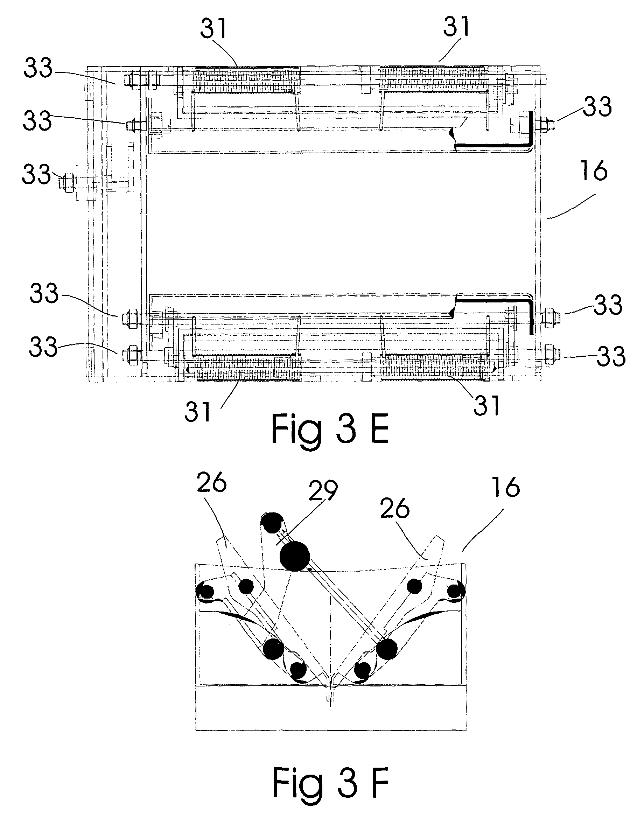

Fig. 3 A is a schematic side view of a receptacle 12, having a shutter 22 at the bottom part. The shutters 22 are held closed by springs 21. The receptacles 12 are mounted in a frame, above the weighing pans 14, by a number of bolts 23 at the ends of the receptacle.

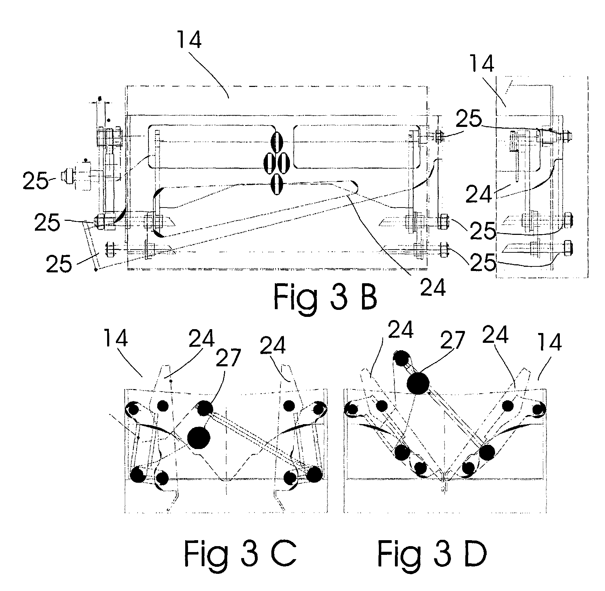

A weighing pan 14 is illustrated in a schematic side view in fig 3 B. Fig 3 C is a schematic cross-sectional view of a weighing pan 14, illustrated with the shutters 24 in an open configuration. Fig 3 D is a cross-sectional view of the weighing pan 14, illustrated with the shutter 24 in a closed configuration. The weighing pans 14 are mounted in the frame above the containers 16 and below the receptacles 12, preferably in register with a corresponding receptacle 12. The weighing pan 14 is mounted to the frame by a number of bolts 25 at respective ends of the weighing pan 14. The weighing pan 14 further includes an opening mechanism 27 for opening both shutters 24 at the same time.

A container 16 is illustrated in a schematic top view in Fig 3 E. The containers 16 are mounted on a rotating carrousel 38 in a level below the weighing pans 14, the carrousel 38 may turn in either clock-wise or counter-clock-wise direction. The container is mounted to the carrousel 38 by a number of bolts 33. Fig 3 F is a schematic cross-sectional view of the container of fig 3 E having the shutter 26 in a closed configuration. The container 16 further includes an opening mechanism 29 for opening both shutters 26 at the same time. The shutters 26 are held closed by a spring system 31.

The weighing pan 14 and the container 16 may have a closed end and a axle for turning/tipping the open end for emptying the article to the next level, as described above regarding the receptacle, this configuration will require the weighing pans 14 and the containers 16 to be shifted in a radial direction.

The operation of the shutters may be performed by actuators, either hydraulic or pneumatic or any combination thereof.

When grading articles, the articles are feed from above, or from any other direction, to an operator distributing the articles into the receptacles 12, alternatively the distribution or allocation into the receptacles 12 may be performed by a mechanical feeder. The articles are kept in the receptacles 12 for some predetermined time, alternatively the receptacles 12 include a sensor for detecting the presence of an article, and the computer then operates the actuators for opening the shutter 22 at the bottom of the receptacle 12. The article then drops into the weighing pan 14, if the receptacle 12 is of a type having a closed bottom and an axle for tipping the receptacle, the weighing pan 14 may be placed shifted with respect of the receptacle 12.

The weighing pan 14 includes a unit for converting the measurement to an electrical signal. The electrical signal is sent to a computer that stores the information and determines which grade or class the article belongs to. This determination is performed based on information provided by an operator, the information including a weight interval for each grade. The computer then activates the actuators connected to the shutter 24 on the weighing pan 14, so that the article drops into the container 16 on the carrousel 38. The computer uses the information regarding the grade and the weight of the article to determine when to activate the shutter 26 on the container 16, preferably when the container 16 is above a drop-off point 18 corresponding to the grade the article belongs to. The machine 10 may further include a reject station or drop-off point 18 for articles that do not fall into any of the specified grades, this reject station is used to ensure that every container 16 on the carrousel 38 is empty before receiving a new article from the weighing pans 14.

The throughput of system described above may further be enhanced by adding a mechanical conveyor 30 of crates, buckets or any other type of container. Due to the geometry of the carrousel 38 and a linear conveyor belt 30 the number of drop-off points 18 may be reduced to e.g. one. This means that in order to obtain a high throughput of articles in the machine 10, a sort of pipelining is needed. The containers 16 may be used to collect a number of articles to obtain a given batch weight or size, or a second carrousel 40 may be introduced in the machine 10'. The second carrousel 40 may be driven by the same motor that drives the first carrousel 38 through another gear, alternatively another motor is used to drive the second carrousel 40.

The conveyor 30 of the second embodiment may further comprise a distribution mechanism for distributing the crates further.

The conveyor may further comprise a labelling mechanism for labelling the boxes with the correct grade or class, which information may be retrieved from the computer. A labelling system of this sort may also be used for including tracking information on the label, which issue may be important for retracing a batch of foodstuff discovered to contain some sort of contamination, bacterial, chemical or any other contaminant.

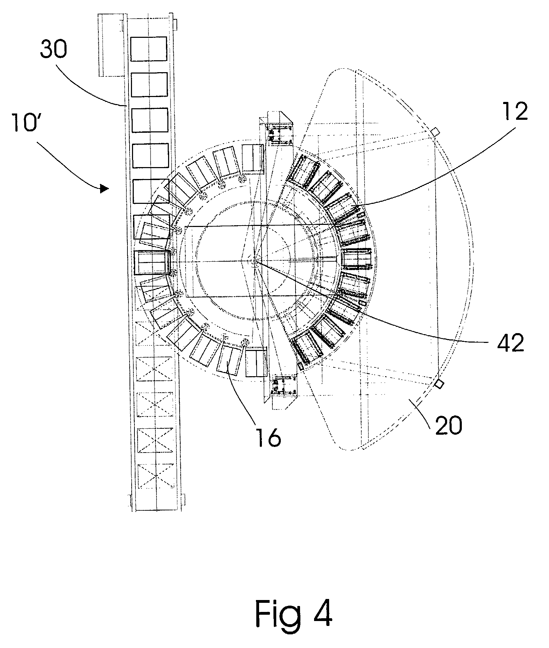

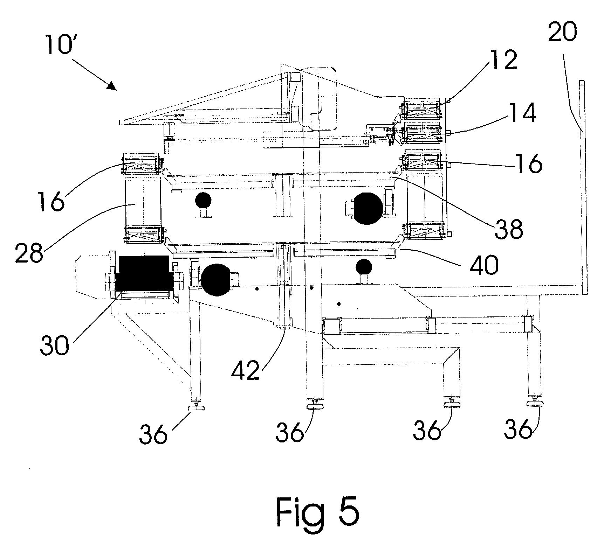

Fig. 4 is a schematic top view of a machine 10' for weighing and grading articles according to a second embodiment of the present invention, Fig. 5 is a schematic cross-sectional view of the machine 10' of Fig. 4.

The second embodiment of the present invention is a system similar to the first embodiment described above but further comprising a second rotating carrousel 40 mounted below the carrousel 38 described above. The second rotating carrousel 40 rotates in the opposite direction of the carrousel 38 described above; alternatively the two carrousels may rotate in the same direction but with different speeds.

The containers 28 of the second rotating carrousel 40 may comprise one or more, such as two, compartments for batching two batches at one time, and thereby obtaining a pipeline-like system increasing the throughput of the system. The computer will trigger the discharge of the articles in the container 16 when the container 16 and the corresponding container 28 of the second carrousel 40 is in register, which may occur at any position along the circumference of the machine 10'.

The present invention is not to be considered limited by the examples described above, e.g. increasing the radius of the system and retaining the dimensions of the receptacles results in the possibility of increasing the number of receptacles thereby increasing the throughput of the system.

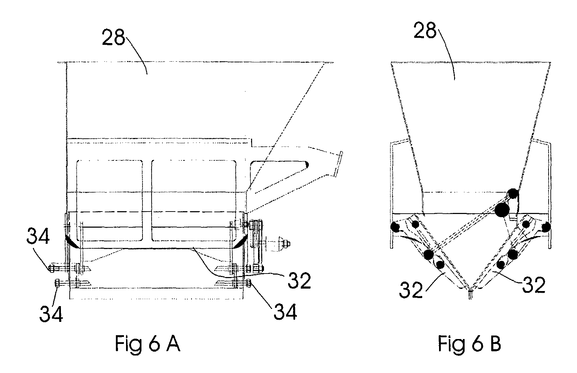

Fig 6 A is a schematic side-view of a container 28 of the second carrousel 40. Fig 6 B is a partly cross-sectional view of the container 28 of Fig 6 A. In Fig 6 B the shutters 32 are in a closed configuration. The container is mounted to the carrousel 40 by a number of bolts 34. In an alternative embodiment the container 28 may comprise two compartments, this enables a continuation of batching or collection of articles even if every container 28 of the second carrousel 40 are filled.

## Claims

1. A weighing and classifying system for weighing, classifying and distributing articles comprising:
a frame,
a shaft mounted in said frame,
a motor for driving said shaft,
a first plurality of receptacles mounted in said frame, said first plurality of receptacles defining a first semicircle around said shaft, each of said receptacles defining a first open end orientated upwardly, said receptacle being operable between a receiving state and a discharge state, said receptacle including a first actuator having an electric input for receiving a first control signal, said first actuator operating said receptacle from said receiving state to said discharge state when receiving said first control signal, said receptacle receiving one of said articles through said first end of said receptacle when in said receiving state, and said receptacle discharging said one article when in said discharge state,
a first plurality of weighing pans mounted in said frame below said first plurality of said receptacles for receiving in each of said weighing pans a single article discharge from a respective receptacle, said first plurality of weighing pans defining a second semicircle around said shaft, each of said weighing pans defining a second open end orientated upwardly, said weighing pan being operable between a weighing state and a transfer state, said weighing pan including a second actuator having a second electric input for receiving a second control signal, said second actuator operating said weighing pan from said weighing state to said transfer state when receiving said second control signal, said weighing pan receiving one of said articles through said second end of said weighing pan from a respective receptacle when in said weighing state, and said weighing pan transferring said one article when in said transfer state, each of said weighing pans including a weighing transducer for generating a signal representing the weight of said one article received within said weighing pan,
a transfer carrousel mounted rotatably on said shaft having a second plurality of transfer containers, said second plurality of transfer containers defining a first circle around said shaft, said second plurality being at least twice the number of said first plurality,
said second plurality of transfer containers mounted on said transfer carrousel below said first plurality of said weighing pans for receiving from each of said weighing pans a single article transferred therefrom in a respective transfer container, each of said transfer containers defining a third open end orientated upwardly, said transfer container being operable between a containment state and an ejection state, said transfer container including a third actuator having a third electric input for receiving a third control signal, said third actuator operating said transfer container from said containment state to said ejection state when receiving said third control signal, said transfer container receiving one of said articles through said third end of said transfer container when in said containment state, and said transfer container ejecting said one article when in said ejection state,
a number of grade positions for receiving a specific grade of articles, said grade positions defining a third semicircle, said third semicircle arranged opposite said first and said second semicircles, each grade corresponding to a specific weight or specific weight interval,
a computer for recording said first, second and third signals from said respective transducers, said computer including a list defining said grades, said computer being connected to said transducers, said actuators and said motor for the controlling thereof.

2. The weighing and classifying system according to claim 1, said system further comprising:
a feeder system for feeding said articles to said first plurality of receptacles and for feeding said individual articles into said individual receptacles of said first plurality receptacles individually.

3. The weighing and classifying system according to any of the claims 1 or 2, said system further comprising a collector carrousel for collecting a specific number of articles of a specific grade, said collector carrousel being positioned below said transfer carrousel and being mounted rotatably on said shaft having a third plurality of collector containers, said transfer carrousel rotating in a direction opposite to the direction of rotation of said transfer carrousel, said third plurality of collector containers being mounted on said collector carrousel, each of said collector containers defining a fourth open end orientated upwardly, said collector container being operable between a collector state and a ejection state, said collector container including a fourth actuator having a fourth electric input for the receiving of a fourth control signal, said fourth actuator operating said container from said collector state to said ejection state when receiving said fourth control signal, and said collector container ejecting said specific number of articles received therein when in said ejection state.

4. A weighing and classifying system for weighing, classifying and distributing articles according to any of the claims 1-3, said system further comprising:
each of said receptacles defining an end opposite said first end, said end opposite said first end having a first shutter, said first shutter shutting said end in a radial direction or in an axial direction alternatively said first shutter being a two-part shutter, said first shutter being operated by said first actuator.

5. A weighing and classifying system for weighing, classifying and distributing articles according to any of the claims 1-3, said system further comprising:
each of said receptacles defining an end opposite said first end, said end being a closed end, said receptacle further comprising a first revolution axle connecting said first actuator and said receptacle.

6. A weighing and classifying system for weighing, classifying and distributing articles according to any of the claims 1-5, said system further comprising:
each of said weighing pans defining an end opposite said second end, said end opposite said second end having a second shutter, said second shutter shutting said end opposite said second end in a radial direction or in an axial direction alternatively said second shutter being a two-part shutter, said shutter being operated by said second actuator.

7. A weighing and classifying system for weighing, classifying and distributing articles according to any of the claims 1-5, said system further comprising:
each of said weighing pans defining an end opposite said second end, said end opposite said second end being a closed end, said weighing pan further comprising a second revolution axle connecting said second actuator and said weighing pan.

8. A weighing and classifying system for weighing, classifying and distributing articles according to any of the claims 1-7, said system further comprising:
each of said transfer containers defining an end opposite said third end, said end opposite said third end having a third shutter, said third shutter shutting said end opposite said third end in a radial direction or in an axial direction alternatively said third shutter being a two-part shutter, said shutter being operated by said second actuator.

9. A weighing and classifying system for weighing, classifying and distributing articles according to any of the claims 1-7, said system further comprising:
each of said transfer containers defining an end opposite said third end, said end opposite said third end being a closed end, said weighing pan further comprising a third revolution axle connecting said third actuator and said transfer container.

10. A system according to any of the preceding claims, said first and second actuator being operated individually or collectively.

11. A system according to any of the preceding claims, said system further comprising,
a platform attached to said frame.

12. A system according to any of the preceding claims, said system further **characterised by** said motor mounted to said shaft by a gear means.

13. A system according to any of the preceding claims, said system further comprising,
a specific grade position for emptying said transfer containers one at a time when said transfer carrousel passes each of said transfer containers over said specific grade position.
